# EUROPEAN PATENT APPLICATION

(11) **EP 3 333 933 A1**
(43) Date of publication of application: **13.06.2018**
(21) Application number: 16834842.3
(22) Date of filing: 21.04.2016
(51) Int. Cl.: H01M 2/10

(54) **CELL MODULE**

(30) Priority: 07.08.2015 JP 2015157769
(71) Applicant: IHI Corporation, Tokyo 135-8710 (JP)
(72) Inventor: IWASAKI Itaru, Tokyo 135-8710 (JP); OUYANG Yijing, Tokyo 135-8710 (JP); HIRATA Kensuke, Tokyo 135-8710 (JP)
(74) Representative: Lamb, Martin John Carstairs
(86) International application number: PCT/JP2016/062609
(87) International publication number: WO 2017/026145

(57) **Abstract**

A cell module including a plurality of flat battery cells (1) to be stacked; and a casing (3) in which the battery cells are accommodated, wherein the casing comprises a container-shaped lower part (30) having an engaging claw (30e) on a side wall portion (30c, 30d), and an upper part (31) in which the battery cells are disposed between the lower part and the upper part and having an engaging hole (31e) with which the engaging claw of the lower part is engaged.

## Description

### [Technical Field]

The present disclosure relates to a cell module.

Priority is claimed on Japanese Patent Application No. 2015-157769, filed August 7, 2015, the content of which is incorporated herein by reference.

### [Background Art]

Recently, a laminate type cell module formed by stacking a plurality of flat battery cells has been developed. In such a cell module, it is known that repeated charging and discharging expands and contracts the battery cell and thus the battery cell deteriorates. Accordingly, in order to suppress the expansion of the battery cell, a method of holding the battery cell in a pressurized state has been devised.

For example, in Patent Document 1, there is disclosed a cell module in which a pressing holder for holding a flat battery cell in a sandwiched manner is provided and a pressed state of the battery cell is maintained by fastening the pressing holder from both sides with a fastening bolt and a fastening nut.

### [Citation List]

### [Patent Document]

[Patent Document 1]
Japanese Unexamined Patent Application, First Publication No. 2008-243639

### [Summary of Invention]

### [Technical Problem]

However, recently, along with complication and miniaturization of apparatuses in which the cell modules are installed, it is necessary to downsize the cell modules. However, in the cell module disclosed in Patent Document 1, an end of the fastening bolt and the fastening nut protrude from an outside of the pressing holder to maintain the pressed state by the fastening bolt and the fastening nut. As such bolts and nuts, large diameter bolts and nuts are used to maintain strength, and this is an impediment to thinning the cell module.

Accordingly, the present disclosure has been made in view of the above-described problems, and an object thereof is to downsize a cell module by allowing a battery cell to be held in a pressed state without using a bolt and a nut.

### [Solution to Problem]

The present disclosure employs the following constitution as means for solving the above-described problems.

A first aspect of the present disclosure is a cell module including a plurality of flat battery cells to be stacked; and a casing in which the battery cells are accommodated, wherein the casing comprises a container-shaped first part having an engaging claw on a side wall portion, and a second part in which the battery cells are disposed between the first part and the second part and having an engaging hole with which the engaging claw of the first part is engaged.

### [Effects of Invention]

According to the present disclosure, the casing of the cell module has the container-shaped first part having the engaging claw on the side wall portion, and the second part in which the battery cells are disposed between the first part and the second part and having the engaging hole with which the engaging claw of the first part is engaged. Therefore, by engaging the engaging claws with the engaging holes, it is possible to fix the first part and the second part. Accordingly, it is possible to hold the battery cell in a pressed state between the first part and the second part. Therefore, it is possible to hold the battery cell in the pressed state without using a bolt and a nut, and it is possible to downsize the cell module.

### [Brief Description of Drawings]

FIG. 1 is a perspective view of a cell module according to one embodiment of the present disclosure.
FIG. 2 is an exploded perspective view of the cell module according to one embodiment of the present disclosure.
FIG. 3 is a cross-sectional view taken along line A-A of FIG. 1.
FIG. 4 is a view showing a welding position of a reinforcing plate in one embodiment of the present disclosure.
FIG. 5A is a perspective view showing an example of a lower part which also serves as a lower case according to the present disclosure.
FIG. 5B is a perspective view showing an example of the lower part which also serves as the lower case according to the present disclosure.
FIG. 5C is a perspective view showing an example of an engagement plate.
FIG. 6 is a perspective view showing an example of an upper part corresponding to the lower part according to the present disclosure.
FIG. 7A is a perspective view showing an example of an upper case applied to the present disclosure.
FIG. 7B is a perspective view showing an example of the upper case applied to the present disclosure.

### [Description of Embodiments]

Hereinafter, an embodiment of a cell module according to the present disclosure will be described with reference to the drawings. Further, in the following drawings, in order to allow each member to have a recognizable size, the scale of each member is appropriately changed.

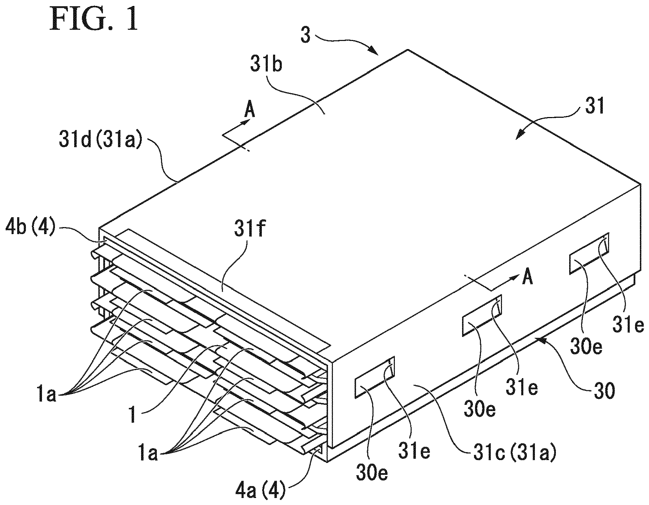

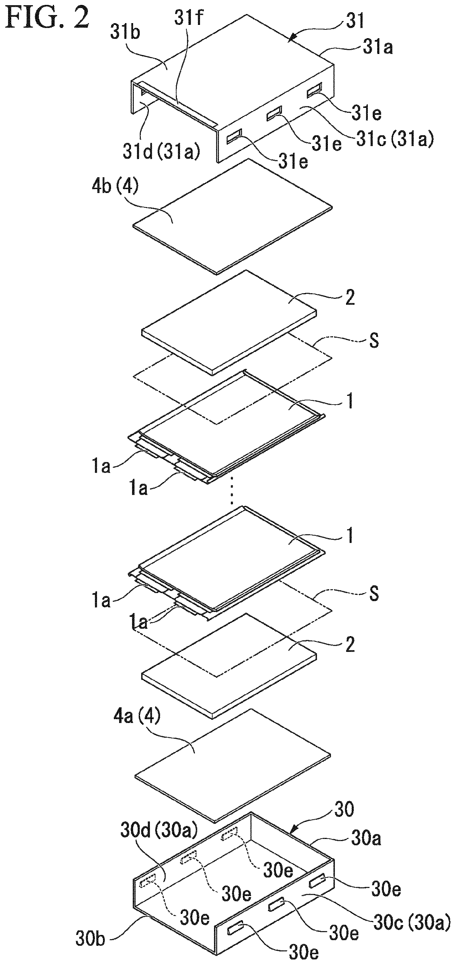

FIG. 1 is a perspective view of a cell module according to one embodiment of the present disclosure, and FIG. 2 is an exploded perspective view of the cell module according to one embodiment of the present disclosure. The cell module of the embodiment is a module of a lithium ion secondary battery and includes a battery cell 1, a buffer material 2, a casing 3 and a reinforcing plate 4 as shown in FIG. 2.

The battery cell 1 is a flat laminated lithium ion secondary battery cell which is formed by stacking a thin positive electrode plate and a thin negative electrode plate with a separator interposed therebetween and laminating the whole structure. The cell module of the embodiment is used as a large capacity battery by stacking a plurality of battery cells 1. Further, the battery cell 1 has an electrode 1a at an end thereof. The electrode 1a is an electrode to be connected to the outside. Charging and discharging of the battery cell 1 is performed through the electrode 1a.

The buffer material 2 is a plate which is formed of an elastic deformable material such as rubber to equalize a pressure applied to the battery cell 1 and to absorb deformation of the battery cell 1 due to an impact and heat or the like generated by vibration of the cell module or the like and applied to the battery cell 1. Such a buffer material 2 is disposed to sandwich the battery cell 1 from front and back sides and is disposed between the battery cells 1 and between the battery cell 1 and the reinforcing plate 4. That is, in the casing 3, the battery cell 1 and the buffer material 2 are arranged to be alternately stacked. In addition, it is preferable to make the thermal conductivity of the buffer material 2 higher than that of the battery cell 1 using a material having excellent thermal conductivity for the buffer material 2. Therefore, it is possible to efficiently release heat generated in the battery cell 1 to the outside via the buffer material 2.

Further, for example, as shown in FIG. 2, a heat radiation sheet S having higher thermal conductivity than the battery cell 1 may be disposed between the battery cell 1 and the buffer material 2. It is necessary for the heat radiation sheet S to be deformable to at least the same extent as the buffer material 2 so that the above-described function of the buffer material 2 is not affected. Specifically, by adjusting the material and the thickness of the heat radiation sheet S, the heat radiation sheet S which has the excellent thermal conductivity and is deformable is formed, and the heat radiation sheet S is stacked between the battery cell 1 and the buffer material 2. Accordingly, it is possible to efficiently release the heat generated in the battery cell 1 to the outside via the heat radiation sheet S.

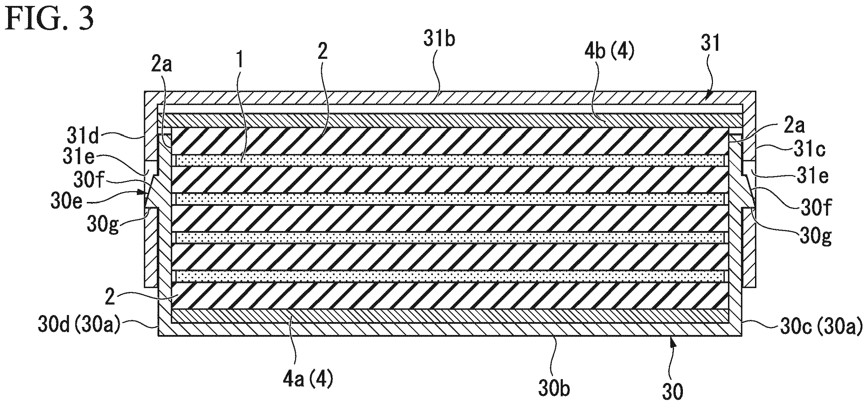

Further, when the heat generated in the battery cell 1 is released to the outside via the buffer material 2 or the heat radiation sheet S, it is desirable for an end of the buffer material 2 or the heat radiation sheet S to be brought into contact with the casing 3. As will be described later, a material having good thermal conductivity such as aluminum is used for the casing 3. Therefore, by bringing the end of the buffer material 2 or the heat radiation sheet S into contact with the casing 3, the heat transferred from the battery cell 1 to the buffer material 2 or the heat radiation sheet S can be transferred again to the casing 3 from the end of the buffer material 2 or the heat radiation sheet S and can be more efficiently discharged to the outside from the casing 3. For example, in FIG. 3 to be described later, an end surface 2a of the buffer material 2 is in contact with a side surface portion 30a of a lower part 30 forming the casing 3 from an inside thereof. Thus, the heat generated in the battery cell 1 can be transmitted to the casing 3 via the end surface 2a of the buffer material 2 and can be more efficiently discharged to the outside from the casing 3.

FIG. 3 is a cross-sectional view taken along line A-A of FIG. 1. The casing 3 is a rectangular parallelepiped container formed of a metallic material such as aluminum which is resistant to an impact such as internal pressure and vibration and has high thermal conductivity and accommodates the battery cell 1. Such a casing 3 includes the lower part 30 (first part) and an upper part 31 (second part) and presses and holds the battery cell 1 by interposing the battery cell 1 and the buffer material 2 between the lower part 30 and the upper part 31 in a stacking direction. Further, an opening is formed in a part of a side surface of the casing 3, and the electrode 1a protrudes from the opening to an outside of the casing 3.

The lower part 30 is a container-shaped part (specifically, a rectangular parallelepiped shape which is open upward) which has the side surface portion 30a constituted with three surfaces and a bottom surface portion 30b for blocking a lower end of the side surface portion 30a. Such a lower part 30 has engaging claws 30e on a right side wall portion 30c and a left side wall portion 30d among the three surfaces of the side surface portion 30a, which are surfaces facing each other across the bottom surface portion 30b.

The engaging claws 30e are three protrusions formed at regular intervals on each of the right side wall portion 30c and the left side wall portion 30d. Also, the engaging claws 30e formed on the right side wall portion 30c and the engaging claws 30e formed on the left side wall portion 30d are line-symmetrically formed with the bottom surface portion 30b interposed therebetween (that is, at positions facing each other across the bottom surface portion 30b). Further, as shown in FIG. 3, the engaging claw 30e has a substantially triangular cross-sectional shape having an inclined surface 30f which expands outward toward the bottom surface portion 30b side and a horizontal portion 30g which is a surface in parallel with the bottom surface portion 30b.

The upper part 31 is a part which covers the lower part 30 from an upper side and has a side surface portion 31a constituted with three wall portions and an upper surface portion 31b for covering an upper side of the side surface portion 31a. Such an upper part 31 has engaging holes 31e in each of a right side wall portion 31c and a left side wall portion 31d among three surfaces of the side surface portion 31a, which are two surfaces facing each other across the upper surface portion 31b.

The engaging holes 31e are rectangular openings formed in the right side wall portion 31c and the left side wall portion 31d. Three engaging holes 31e are formed at regular intervals corresponding to positions of the engaging claws 30e to engage the engaging claws 30e, and similarly to the engaging claws 30e, the engaging holes 31e formed in the right side wall portion 31c and the engaging holes 31e formed in the left side wall portion 31d are provided line-symmetrically across the upper surface portion 31b.

In addition, a reinforcing portion 31f formed by bending an edge portion of the upper surface portion 31b upward and then bending the edge portion again to overlap with an upper surface of the upper surface portion 31b is formed at a portion of the upper surface portion 31b in which the side surface portion 31a is not formed (a portion corresponding to the opening for protruding the electrode 1a). The reinforcing portion 31f prevents deformation of the upper part 31 when the battery cell 1 is pressed and held between the lower part 30 and the upper part 31.

The reinforcing plate 4 is a metal plate member which is interposed between the casing 3 and the battery cell 1 to prevent the casing 3 from being deformed by expansion of the battery cell 1. As the reinforcing plate 4, a bottom side reinforcing plate 4a and an upper side reinforcing plate 4b are installed. A lower surface of the bottom side reinforcing plate 4a is fixed to the bottom surface portion 30b by spot welding, and an entire upper surface thereof is in contact with the buffer material 2. The bottom side reinforcing plate 4a is interposed between the lower part 30 and the battery cell 1 via the buffer material 2. Further, the bottom side reinforcing plate 4a covers an entire area of the battery cell 1 as seen in the stacking direction of the battery cells 1. Furthermore, a contact surface of the bottom side reinforcing plate 4a which is in contact with the buffer material 2 is a flat surface without irregularities.

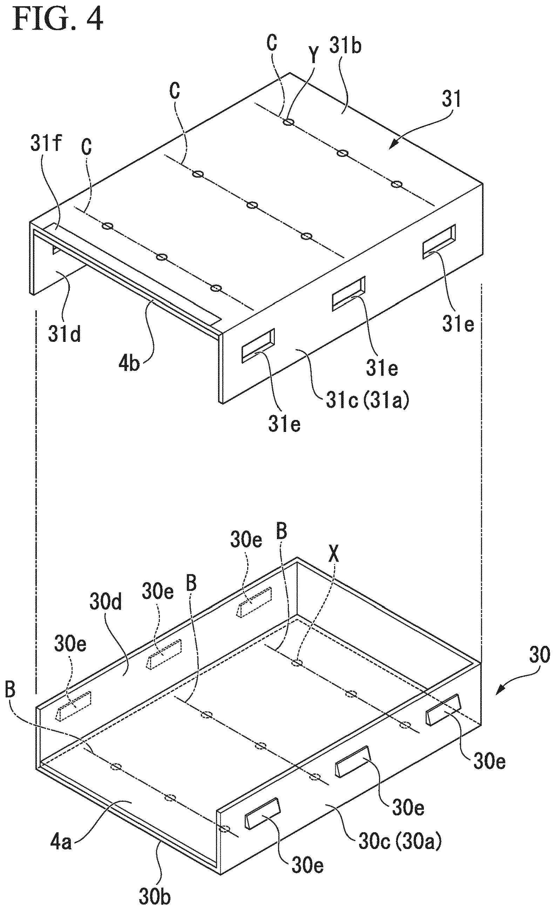

FIG. 4 is a view showing a welding position of the reinforcing plate 4 in the embodiment. The bottom side reinforcing plate 4a is spot-welded to the lower part 30 at welding points X provided on straight lines B. The straight lines B are three straight lines which connect between two facing engaging claws 30e arranged on a side closest to the opening of the side surface portion 30a, between two facing engaging claws 30e arranged second from the opening and between engaging claws 30e arranged on a side furthest away from the opening when seen in the stacking direction of the battery cell 1. Three welding points X are provided at regular intervals on each of the straight lines B. That is, the bottom side reinforcing plate 4a welded to the lower part 30 at a plurality of positions (nine positions in FIG. 4) prevents the bottom surface portion 30b from being deformed and also prevents the deformation of the entire lower part 30.

An upper surface of the upper side reinforcing plate 4b is fixed to the upper surface portion 31b, and an entire lower surface thereof is in contact with the buffer material 2. Like the bottom side reinforcing plate 4a, the upper side reinforcing plate 4b is interposed between the upper part 31 and the battery cell 1 via the buffer material 2. Also, the upper side reinforcing plate 4b covers an entire area of the battery cell 1 as seen in the stacking direction of the battery cells 1. A contact surface of the upper side reinforcing plate 4b which is in contact with the buffer material 2 is a flat surface without irregularities.

Further, the upper side reinforcing plate 4b is spot-welded at welding points Y on straight lines C. The straight lines C are three straight lines which connect two facing engaging holes 31e arranged on a side closest to the opening of the side surface portion 31a, two facing engaging holes 31e arranged second from the opening and engaging holes 31e arranged on a side furthest away from the opening when seen in the stacking direction of the battery cell 1. Therefore, when seen in the stacking direction of the battery cell 1 in a state in which the lower part 30 and the upper part 31 are engaged, the straight lines C are three straight lines which connect the two facing engaging claws 30e arranged first from the opening of the side surface portion 30a, the two facing engaging claws 30e arranged second and engaging claws 30e arranged at the innermost side. Three welding points Y are provided at regular intervals on each of the straight lines C. That is, the upper side reinforcing plate 4b welded to the upper part 31 at a plurality of positions (nine positions in FIG. 4) prevents the upper surface portion 31b from being deformed and also prevents the deformation of the entire upper part 31.

Next, an assembling process of the cell module according to the embodiment will be described. Further, in the following description, the bottom side reinforcing plate 4a is previously joined to the lower part 30 by the spot welding, and the upper side reinforcing plate 4b is joined to the upper part 31 by the spot welding.

First, the buffer material 2 and the battery cell 1 are alternately stacked on the bottom side reinforcing plate 4a joined to the lower part 30. At this time, a height of a stacked body of the buffer material 2 and the battery cell 1 is a height which protrudes upward from the side surface portion 30a of the lower part 30. The upper part 31 is placed from an upper side of the lower part 30 in which the stacked body of the buffer material 2 and the battery cell 1 is arranged, and the upper part 31 is pushed downward to compress the stacked body of the buffer material 2 and the battery cell 1. At this time, the side surface portion 31a of the upper part 31 is disposed outside the side surface portion 30a of the lower part 30. Therefore, the right side wall portion 31c and the left side wall portion 31d of the upper part 31 are elastically deformed in a direction which expands outward by being guided along the inclined surface 30f of the engaging claw 30e of the lower part 30. Further, when the upper part 31 is pushed toward the lower part 30, the engaging claw 30e is inserted into the engaging hole 31e from an inside thereof. Accordingly, the right side wall portion 31c and the left side wall portion 31d of the upper part 31 are restored to their original shapes, and the engaging claws 30e of the lower part 30 are engaged with the upper part 31. At this time, the lower part 30 and the upper part 31 are fixed by the horizontal portion 30g of the engaging claw 30e being caught by a lower edge of the engaging hole 31e.

As the engaging claws 30e of the lower part 30 are engaged with the upper part 31 as described above, the stacked body of the buffer material 2 and the battery cell 1 is interposed between the lower part 30 and the upper part 31 in the stacking direction of the battery cell 1 and held in a pressed state.

When the cell module of the embodiment assembled as described above is connected to a power source and charged, a temperature of the battery cell 1 increases and the battery cell 1 expands. At this time, since the horizontal portion 30g of the engaging claw 30e is fixed by being caught on the lower edge of the engaging hole 31e, the upper part 31 does not move upward. Therefore, the expansion of the battery cell 1 is prevented, and the deformation of the battery cell 1 is prevented.

As described above, in the cell module of the embodiment, the casing 3 includes the lower part 30 which has the engaging claws 30e on the right side wall portion 30c and the left side wall portion 30d, and the upper part 31 in which the battery cell 1 is disposed between the upper part 31 and the lower part 30 and having the engaging holes 31e with which the engaging claws 30e of the lower part 30 are engaged. In such a cell module according to the embodiment, the lower part 30 and the upper part 31 are fixed by inserting and engaging the engaging claws 30e into/with the engaging holes 31e. Accordingly, when the battery cell 1 expands and a force which pushes the upper part 31 up acts, the engaging claws 30e are caught in the engaging holes 31e, and thus the upper part 31 is not separated. Therefore, it is possible to hold the battery cell 1 in the pressed state without using bolts and nuts.

In addition, the cell module according to the embodiment includes the reinforcing plate 4 interposed between the lower part 30 and the upper part 31 and between the lower part 31 and the battery cell 1. Therefore, the reinforcing plate 4 can receive a force which expands the battery cell 1, and thus the deformation of the lower part 30 and the upper part 31 can be prevented.

According to the cell module of the embodiment, the reinforcing plate 4 covers the entire area of the battery cell 1 as seen in the stacking direction of the battery cell 1, and the surface (contact surface) thereof is flat. Therefore, the entire surface of the battery cell 1 can be restrained by the reinforcing plate 4 and the buffer material 2, and the entire surface of the battery cell 1 can be equally pressed. Also, since the buffer material 2 is formed to be elastically deformable, the battery cell 1 can be equally pressed by the elastic deformation of the buffer material 2, and it is also possible to absorb the deformation of the battery cell 1 due to the impact and the heat or the like applied to the battery cell 1 by the vibration of the cell module or the like.

Further, according to the cell module of the embodiment, the reinforcing plate 4 is spot-welded at the welding points which overlap the straight lines B connecting the engaging claws 30e formed on the right side wall portion 30c and the engaging claws 30e formed on the symmetrical left side wall portion 30d. Although stress is concentrated around the engaging claws 30e and the engaging holes 31e in the embodiment, separation of the reinforcing plate 4 from the lower part 30 and the upper part 31 due to the stress can be prevented by providing the welding points (that is, welding spots) in the vicinity of these locations.

Further, according to the cell module of the embodiment, since the casing 3 and the reinforcing plate 4 are formed of a metallic material having good thermal conductivity, the heat generated in the battery cell 1 can be efficiently discharged to the outside via the casing 3 and the reinforcing plate 4. Furthermore, since the end surface 2a of the buffer material 2 is in contact with the side surface portion 30a of the lower part 30 constituting the casing 3 from the inside thereof, the heat generated in the battery cell 1 can be transmitted to the casing 3 via the end surface 2a of the buffer material 2 and can be more efficiently discharged to the outside from the casing 3.

A preferred embodiment of the present disclosure has been described above with reference to the drawings, but the present disclosure is not limited to the above-described embodiment. The shapes and combinations of the constituent members shown in the above-described embodiments are mere examples, and various modifications can be made based on design requirements or the like without departing from the gist of the present disclosure.

For example, in the above-described embodiment, the cell module has the reinforcing plate 4, but the present disclosure is not limited thereto. The reinforcing plate 4 may not be provided, and the lower part 30 and the upper part 31 in which ribs are formed on outer surfaces (the bottom surface portion 30b and the upper surface portion 31b) may be provided. According to the lower part 30 and the upper part 31 of which the outer surfaces are processed to have the ribs, since the reinforcing plate 4 is unnecessary, it is possible to reduce the weight as compared with the cell module according to the embodiment while maintaining strength of the bottom surface portion 30b and the upper surface portion 31b.

Further, in the above-described embodiment, the lower part 30 is a first part having the engaging claws 30e, and the upper part 31 is a second part having the engaging holes 31e, but the present disclosure is not limited thereto. The upper part according to the present disclosure may be the first part having the engaging claws, and the lower part may be the second part having the engaging holes.

Also, in many cases, the cell module is accommodated and used in a case which is vertically divided into two parts. In this case, a lower side case (hereinafter referred to as a lower case) of the cases vertically divided into two parts may also serve as the lower part of the casing 3.

Hereinafter, an embodiment of the present disclosure in the case in which the lower case also serves as the lower part of the casing 3 will be described. Further, in the following description, members having the same functions as the members shown in FIGS. 1 to 4 are denoted by the same reference numerals as those shown in FIGS. 1 to 4, and description and illustration thereof are omitted.

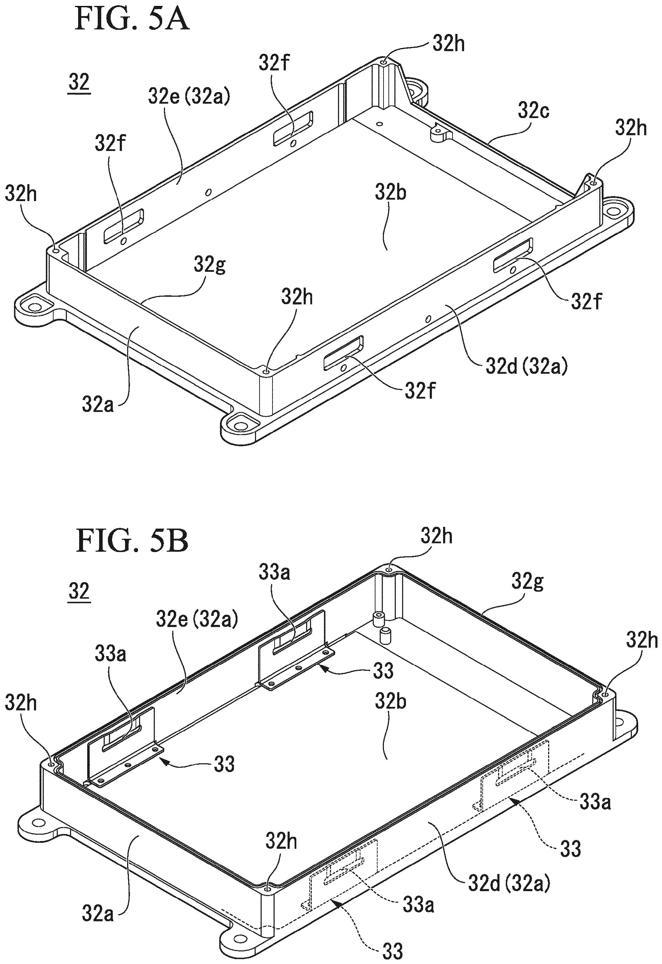

FIG. 5A is a perspective view showing an example of a lower part 32 which also serves as the lower case.

The lower part 32 shown in FIG. 5A is a container-shaped part (specifically, a rectangular parallelepiped shape which is open upward) having a side surface portion 32a constituted with three surfaces and a bottom surface portion 32b for blocking a lower end of the side surface portion 32a, and is formed of a metallic material such as aluminum. Additionally, the battery cell 1 and the buffer material 2 are interposed between the lower part 32 and an upper part which will be described later in a stacking direction, thereby pressing and holding the battery cell 1. In addition, reference numeral 32c is an opening formed in a part of a side surface of the lower part 32 to protrude the electrode 1a of the battery cell 1 to the outside of the casing 3.

The lower part 32 has engaging holes 32f in a right side wall portion 32d and a left side wall portion 32e among the three surfaces of the side surface portion 32a, which are surfaces facing each other across the bottom surface portion 32b. The engaging holes 32f are rectangular openings formed at two positions of each of the right side wall portion 32d and the left side wall portion 32e at regular intervals. Further, the engaging holes 32f formed in the right side wall portion 32d and the engaging holes 32f formed in the left side wall portion 32e are line-symmetrically formed with the bottom surface portion 32b interposed therebetween.

In addition, like the lower part 30 shown in FIGS. 1 to 4, the bottom side reinforcing plate 4a is joined to the bottom surface portion 32b of the lower part 32 by the spot welding.

Further, the lower part 32 also serves as the lower case for accommodating the cell module. Therefore, a screw hole 32h for fixing an upper side case (hereinafter referred to as an upper case) to be described later is formed at positions of an upper end surface 32g of the side surface portion 32a which correspond to four corners of a rectangular parallelepiped formed by the lower part 32.

On the other hand, when the engaging holes 32f and the opening 32c are formed in the side surface portion 32a of the lower part 32, airtightness of the case is lowered due to their presence. For the purpose of preventing such a disadvantage, the lower part 32 without the engaging holes 32f and the opening 32c in the side surface portion 32a may be provided.

FIG. 5B is a perspective view showing an example in which the lower part 32 also serving as the lower case does not have the engaging holes 32f and the opening 32c in the side surface portion 32a.

The lower part 32 shown in FIG. 5B is a container-shaped part (specifically, a rectangular parallelepiped shape which is open upward) having the side surface portion 32a constituted with four surfaces surrounding the lower part 32 and the bottom surface portion 32b for blocking a lower end of the side surface portion 32a. Further, instead of the engaging holes 32f, an engaging plate 33 having an engaging hole 33a is installed at each of the right side wall portion 32d and the left side wall portion 32e of the side surface portion 32a.

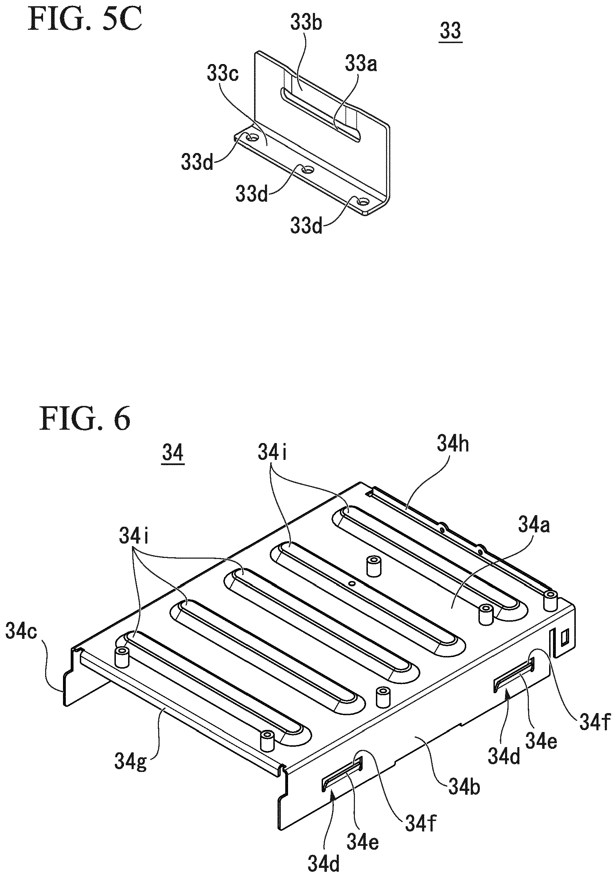

The engaging plate 33 is a metal member having a rectangular shape as shown in FIG. 5C, and a slit-shaped engaging hole 33a is open along one side thereof. Also, between the engaging hole 33a and the one side, a protruding portion 33b is formed by slightly protruding a surface of the engaging plate 33. Further, a side of the engaging plate 33 facing the one side is bent at a right angle in the same direction as that of the protruding portion 33b to form a bent portion 33c, and a plurality of (three in the drawing) screw holes 33d are formed in the bent portion 33c.

Two engaging plates 33 are installed at regular intervals on inner side surfaces of the right side wall portion 32d and the left side wall portion 32e. Specifically, each of the engaging plates 33 is erected so that the bent portion 33c faces the bottom surface portion 32b along the inner side surfaces of the right side wall portion 32d and the left side wall portion 32e, and is fixed to the bottom surface portion 32b by screws screwed to the bottom surface portion 32b via the screw holes 33d. Further, the engaging plate 33 installed on the right side wall portion 32d and the engaging plate 33 installed on the left side wall portion 32e are positioned line-symmetrically with the bottom surface portion 32b interposed therebetween.

Another constitution of the lower part 32 shown in FIG. 5B is the same as that of the lower part 32 shown in FIG. 5A.

Since the lower part 32 shown in FIG. 5B does not have the engaging holes 32f and the opening 32c in the side surface portion 32a, the airtightness of the lower part 32 is improved as compared with the lower part 32 shown in FIG. 5A. Also, there is an effect that a structure of a metal mold for manufacturing the lower part 32 is simplified. In the example shown in FIG. 5B, although each of the engaging plates 33 is fixed to the bottom surface portion 32b by the screws screwed to the bottom surface portion 32b via the screw holes 33d, the engaging plates 33 may be fixed to the side surface portion 32a and/or the bottom surface portion 32b by welding. Furthermore, when the side surface portion 32a and the bottom surface portion 32b of the lower part 32 are molded with a resin or the like, the engaging plates 33 may be embedded and fixed in the side surface portion 32a and/or the bottom surface portion 32b without providing the screw holes 33d in the engaging plate 33.

FIG. 6 is a perspective view showing an example of an upper part 34 constituting the casing 3 together with the above-described lower part 32.

The upper part 34 is a part which is fitted to the lower part 32 from an upper side and is formed of a metallic material such as aluminum. The upper part 34 has a rectangular upper surface portion 34a, and a right side wall portion 34b and a left side wall portion 34c which are two surfaces facing each other with the upper surface portion 34a interposed therebetween and further has engaging claws 34d on the right side wall portion 34b and the left side wall portion 34c (only the engaging claw 34d formed on the right side wall portion 34b is shown in FIG 6).

The engaging claws 34d are protrusions which are formed at regular intervals at two positions of each of the right side wall portion 34b and the left side wall portion 34c corresponding to positions of the engaging holes 32f and 33a to engage with the engaging holes 32f and 33a. Further, like the engaging holes 32f and 33a, the engaging claws 34d formed on the right side wall portion 34b and the engaging claws 34d formed on the left side wall portion 34c are line-symmetrically formed with the upper surface portion 34a interposed therebetween. In addition, the engaging claw 34d has an inclined portion 34e which expands outward toward the upper surface portion 34a side and a horizontal portion 34f which is formed at an upper end of the inclined portion 34e and is a surface in parallel with the upper surface portion 34a.

Further, reinforcing portions 34g and 34h which are formed by edge portions of the upper surface portion 34a being bent upward or downward are formed at portions (a portion corresponding to the opening for protruding the electrode 1a and a portion facing the portion with the upper surface portion 34a interposed therebetween) of the upper surface portion 34a in which the left and right side wall portions 34b and 34c are not formed. Furthermore, a plurality of ribs 34i protruding upward are formed on the upper surface portion 34a. The reinforcing portions 34g and 34h and the ribs 34i prevent deformation of the upper part 34 when the battery cell 1 is pressed and held between the lower part 32 and the upper part 34.

In addition, like the upper part 31 shown in FIGS. 1 to 4, the upper side reinforcing plate 4b is joined to the upper surface portion 34a of the upper part 34 by the spot welding.

Next, the assembling process of the cell module according to the embodiment of the present disclosure including the lower part 32 shown in FIGS. 5A and 5B and the upper part 34 shown in FIG. 6 will be described.

First, the buffer material 2 and the battery cell 1 are alternately stacked on the bottom side reinforcing plate 4a joined to the lower part 32. At this time, a height of a stacked body of the buffer material 2 and the battery cell 1 is a height which protrudes upward from the side surface portion 32a of the lower part 32. The upper part 34 is placed from an upper side of the lower part 32 in which the stacked body of the buffer material 2 and the battery cell 1 is arranged, and the upper part 34 is pushed downward to compress the stacked body of the buffer material 2 and the battery cell 1. At this time, the right side wall portion 34b and the left side wall portion 34c of the upper part 34 are disposed inside the right side surface wall 32d and the left side wall portion 32e of the lower part 32. Therefore, the right side wall portion 34b and the left side wall portion 34c of the upper part 34 are elastically deformed inward by being guided along the inclined portion 34e of the engaging claw 34d of the upper part 34. Further, when the upper part 34 is pushed in a direction of the lower part 32, the engaging claws 34d are inserted into the engaging holes 32f and 33a from an inside thereof. Accordingly, the right side wall portion 34b and the left side wall portion 34c of the upper part 34 are restored to original shapes thereof, and the engaging claws 34d of the upper part 34 are engaged with the lower part 32. At this time, the lower part 32 and the upper part 34 are fixed by the horizontal portion 34f of the engaging claw 34d being caught by an upper edge of the engaging hole 32f (or a lower edge of the protruding portion 33b).

As the engaging claws 34d of the upper part 34 are engaged with the lower part 32 as described above, the stacked body of the buffer material 2 and the battery cell 1 is interposed between the lower part 32 and the upper part 34 in the stacking direction of the battery cell 1 and held in a pressed state. At this time, although not shown, the end surface of the buffer material 2 is in contact with the right side wall portion 34b and the left side wall portion 34c of the upper part 34 constituting the casing 3 from the inside thereof.

By covering the assembled cell module of the embodiment with the upper case from an upper side thereof, the cell module is accommodated in the case which is vertically divided into two parts.

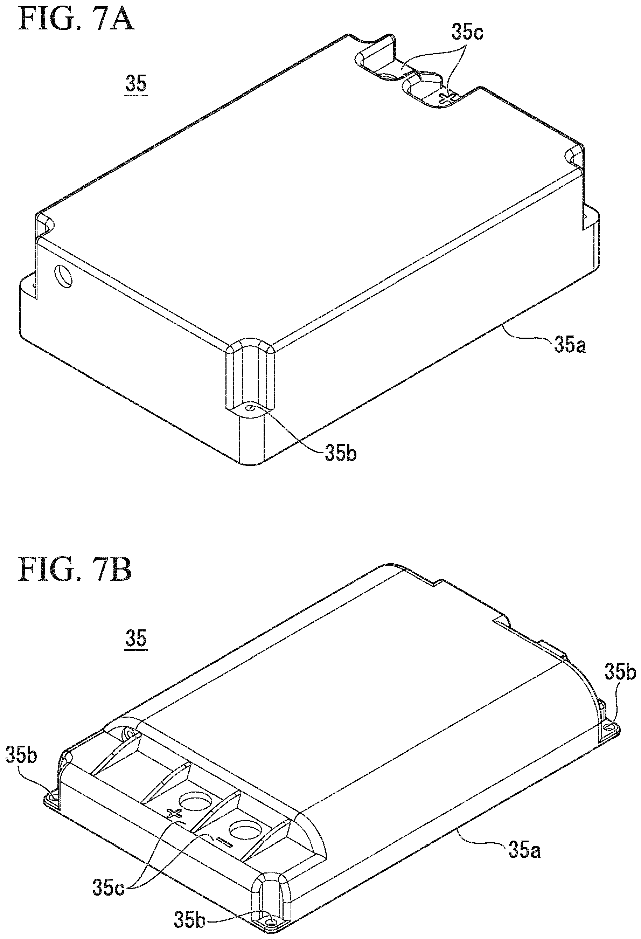

FIGS. 7A and 7B are perspective views showing examples of an upper case 35 proper to the lower part (lower case) 32 of the embodiment. Here, FIG. 7A shows the upper case 35 corresponding to the lower part 32 shown in FIG. 5A, and FIG. 7B shows the upper case 35 corresponding to the lower part 32 shown in FIG. 5B. The upper case 35 is a container having a rectangular parallelepiped shape which is open at a lower end thereof and has a size capable of accommodating the cell module and is, for example, a resin integrally molded product. Additionally, by covering the cell module with the upper case 35 from an upper side so that a lower end surface 35a of the upper case 35 is in contact with the upper end surface 32g of the side surface portion 32a of the lower part 32 from an upper side thereof, the cell module is accommodated in the case.

In addition, screw holes 35b are formed at positions corresponding to four corners of a rectangular parallelepiped formed by the upper case 35. When the lower end surface 35a of the upper case 35 is brought into contact with the upper end surface 32g of the side surface portion 32a of the lower part 32, an axis of each of the screw holes 35b coincides with an axis of each of the screw holes 32h of the lower part 32. Additionally, in this state, the upper case 35 is fixed to the lower part 32 by screwing screws into the screw holes 35b and 32h. Further, a reference numeral 35c is a lead-out portion which is formed on a part of an upper surface of the upper case 35 to lead a terminal or the like extending from the electrode 1a of the battery cell 1 to the outside of the case.

An operation and an effect of the cell module accommodated in the case assembled as described above is the same as those of the embodiment shown in FIGS. 1 to 4. That is, the lower part 32 and the upper part 34 are fixed by the horizontal portion 34f of the engaging claw 34d being caught by an upper edge of the engaging hole 32f (or a lower edge of the protruding portion 33b), and the upper part 31 does not move upward. Therefore, the expansion of the battery cell 1 is suppressed, and the deformation of the battery cell 1 is prevented.

Further, when the battery cell 1 expands and a force which pushes up the upper part 34 acts, the engaging claws 34d are caught in the engaging holes 32f and 33a, and thus the upper part 34 is not separated. Therefore, it is possible to hold the battery cell 1 in the pressed state without using bolts and nuts.

In addition, since the reinforcing plate 4 interposed among the lower part 32 and the upper part 34 and the battery cell 1 are included, the reinforcing plate 4 can receive the force which expands the battery cell 1, and thus the deformation of the lower part 32 and the upper part 34 can be prevented.

Further, since the reinforcing plate 4 covers the entire area of the battery cell 1 as seen in the stacking direction of the battery cell 1 and the surface (contact surface) thereof is flat, the entire surface of the battery cell 1 can be restrained by the reinforcing plate 4 and the buffer material 2, and the entire surface of the battery cell 1 can be equally pressed. Also, since the buffer material 2 is formed to be elastically deformable, the battery cell 1 can be equally pressed by the elastic deformation of the buffer material 2, and it is also possible to absorb the deformation of the battery cell 1 due to the impact and the heat or the like applied to the battery cell 1 by the vibration of the cell module or the like.

Further, by providing the welding point of the reinforcing plate 4 in the vicinity of the engaging claws 34d and the engaging holes 32f and 33a, which is a place in which stress concentration is likely to occur, the separation of the reinforcing plate 4 from the lower part 32 and the upper part 34 due to the stress can be prevented.

Further, since the casing 3 is formed of a metallic material having good thermal conductivity, the heat generated in the battery cell 1 can be efficiently discharged to the outside via the casing 3. Furthermore, since the end surface of the buffer material 2 is in contact with the right side wall portion 34b and the left side wall portion 34c of the upper part 34 constituting the casing 3 from an inside thereof, the heat generated in the battery cell 1 can be transmitted to the casing 3 via the end surface of the buffer material 2 and can be more efficiently discharged to the outside from the casing 3.

Furthermore, since the lower part 32 of the casing 3 also serves as the lower case (that is, the lower part 32 is integrated with the lower case), it is unnecessary to separately manufacture the lower part 32 and the lower case, and thus cost is reduced. In addition, since the lower part 32 of the casing 3 also serves as the lower case, it is advantageous also in the viewpoint of light weight and miniaturization.

### [Industrial Applicability]

It is possible to hold the battery cell in the pressed state without using the bolts and nuts, and thus it is possible to downsize the cell module.

### [Reference Signs List]

1 Battery cell
1a Electrode
2 Buffer material
3 Casing
4 Reinforcing plate
30, 32 Lower part
30a, 32a Side surface portion
30b, 32b Bottom surface portion
30c, 32d Right side wall portion
30d, 32e Left side wall portion
30e, 34d Engaging claw
31, 34 Upper part
31a Side surface portion
31b, 34a Upper surface portion
31c, 34b Right side wall portion
31d, 34c Left side wall portion
31e, 32f, 33a Engaging hole
B, C Straight line
S Heat radiation sheet
X, Y Welding point

## Claims

1. A cell module comprising:
a plurality of flat battery cells to be stacked; and
a casing in which the battery cells are accommodated,
wherein the casing comprises a container-shaped first part having an engaging claw on a side wall portion, and a second part in which the battery cells are disposed between the first part and the second part and having an engaging hole with which the engaging claw of the first part is engaged.

2. The cell module according to claim 1, comprising a reinforcing plate interposed between at least one of the first part and the second part and the battery cell.

3. The cell module according to claim 2, wherein the reinforcing plate covers an entire area of the battery cell when seen in a stacking direction of the battery cell, and a surface of the reinforcing plate is flat.

4. The cell module according to claim 2, wherein the first part has two facing side wall portions and the engaging claws formed on each of the side wall portions, the second part has two facing side wall portions and the engaging holes formed in each of the side wall portions, and the reinforcing plate is spot-welded to the first part or the second part at positions overlapping with a straight line connecting the engaging claws formed on the two facing side wall portions when seen from the stacking direction of the battery cell.

5. The cell module according to claim 3, wherein the first part has two facing side wall portions and the engaging claws formed on each of the side wall portions, the second part has two facing side wall portions and the engaging holes formed in each of the side wall portions, and the reinforcing plate is spot-welded to the first part or the second part at positions overlapping with a straight line connecting the engaging claws formed on the two facing side wall portions when seen from the stacking direction of the battery cell.

6. The cell module according to claim 1, wherein an elastically deformable buffer material is disposed between the stacked battery cells.

7. The cell module according to claim 6, wherein thermal conductivity of the buffer material is higher than that of the battery cell.

8. The cell module according to claim 6, wherein a heat radiation sheet having thermal conductivity higher than that of the battery cell is disposed between the battery cell and the buffer material.

9. The cell module according to any one of claims 1 to 8, wherein one of the first part and the second part located at a lower portion is integrated with a part of a case configured to accommodate the cell module.

10. The cell module according to claim 9, wherein the engaging hole of the second part is an opening of the side wall portion of the second part or an opening of an engaging plate installed on an inner side surface of the side wall portion.

## Amended claims

### Amended claims under Art. 19.1 PCT

**1.** (amended) A cell module comprising:
a plurality of flat battery cells to be stacked; and
a casing in which the battery cells are accommodated,
wherein the casing comprises a container-shaped first part having an engaging claw on a side wall portion, and a second part in which the battery cells are disposed between the first part and the second part and having an engaging hole with which the engaging claw of the first part is engaged, and
one of the first part and the second part located at a lower portion is integrated with a part of a case configured to accommodate the cell module.

**2.** The cell module according to claim 1, comprising a reinforcing plate interposed between at least one of the first part and the second part and the battery cell.

**3.** The cell module according to claim 2, wherein the reinforcing plate covers an entire area of the battery cell when seen in a stacking direction of the battery cell, and a surface of the reinforcing plate is flat.

**4.** The cell module according to claim 2, wherein the first part has two facing side wall portions and the engaging claws formed on each of the side wall portions, the second part has two facing side wall portions and the engaging holes formed in each of the side wall portions, and the reinforcing plate is spot-welded to the first part or the second part at positions overlapping with a straight line connecting the engaging claws formed on the two facing side wall portions when seen from the stacking direction of the battery cell.

**5.** The cell module according to claim 3, wherein the first part has two facing side wall portions and the engaging claws formed on each of the side wall portions, the second part has two facing side wall portions and the engaging holes formed in each of the side wall portions, and the reinforcing plate is spot-welded to the first part or the second part at positions overlapping with a straight line connecting the engaging claws formed on the two facing side wall portions when seen from the stacking direction of the battery cell.

**6.** The cell module according to claim 1, wherein an elastically deformable buffer material is disposed between the stacked battery cells.

**7.** The cell module according to claim 6, wherein thermal conductivity of the buffer material is higher than that of the battery cell.

**8.** The cell module according to claim 6, wherein a heat radiation sheet having thermal conductivity higher than that of the battery cell is disposed between the battery cell and the buffer material.

**9.** cancelled)

**10.** (amended) The cell module according to claim 1, wherein the engaging hole of the second part is an opening of the side wall portion of the second part or an opening of an engaging plate installed on an inner side surface of the side wall portion.
